# EUROPEAN PATENT SPECIFICATION

(11) **EP 3 929 693 B1**
(45) Date of publication and mention of the grant of the patent: **08.11.2023**
(21) Application number: 21180243.4
(22) Date of filing: 18.06.2021
(51) Int. Cl.: G05D 9/12, G05D 7/06, B65B 9/00, B65B 3/30, B65B 9/20

(54) **A METHOD FOR ADJUSTING AN INLET PRESSURE OF A PACKAGING MACHINE**
VERFAHREN ZUM EINSTELLEN EINES EINLASSDRUCKS EINER VERPACKUNGSMASCHINE
PROCÉDÉ PERMETTANT DE RÉGLER UNE PRESSION D'ENTRÉE D'UNE MACHINE D'EMBALLAGE

(30) Priority: 24.06.2020 EP 20181962
(43) Date of publication of application: 29.12.2021
(73) Proprietor: Tetra Laval Holdings & Finance S.A., 1009 Pully (CH)
(72) Inventor: BASSISSI, Fabio, 41126 Modena (IT); GARUTI, Nicola, 42019 Scandiano (IT); VILLANI, Federica, 40061 Minerbio (BO) (IT)
(74) Representative: Tetra Pak - Patent Attorneys SE

(56) References cited:
- JP-A- S59 109 918
- US-A1- 2004 074 311
- US-A1- 2011 054 702
- US-A1- 2012 192 969
- US-A1- 2017 344 032
- Bill Bolton: "Instrumentation and Control Systems - chapter 13 - Controllers", , 1 January 2014 (2014-01-01), XP055737048, ISBN: 978-0-7506-6432-5 Retrieved from the Internet: URL:https://doi.org/10.1016/B978-0-7506-64 32-5.X5000-1 [retrieved on 2020-10-06]
- Apmonitor.Com: "Cascade Control Design Introduction", , 2 December 2016 (2016-12-02), XP055979163, Retrieved from the Internet: URL:https://www.youtube.com/watch?v=rU5uaS wtbBE [retrieved on 2022-11-08]
- Anonymous: "Feedforward or Cascade Control", , 16 November 2017 (2017-11-16), XP055848963, Retrieved from the Internet: URL:http://apmonitor.com/pdc/index.php/Mai n/FeedforwardCascadeControl [retrieved on 2021-10-07]

## Description

### Technical Field

The invention is related to packaging technology. More particularly, it is related to controlling a regulating valve of a packaging machine.

### Background Art

Today it is commonly known to use roll-fed packaging machines for different types of food products, e.g. milk. The roll-fed packaging machines are configured to be connected to a processing line such that the food products may be fed from the processing line to the packaging machine. The roll-fed packaging machines, also referred to as filling machines, have several advantages. One is that a continuous production of packages makes it possible to achieve higher speed compared to blanks-fed packaging systems. Another advantage is that by continuously filling a tube of packaging material and forming packages in a lower end of the tube, a risk that unwanted microorganisms enter the packages can be lowered.

Even though the roll-fed packaging machines of today are efficient in terms of produced packages per hour, and that the packaging machines have different systems in place to assure that the packages produced fulfil set quality requirements, there is nevertheless room for improvement. For instance, due to that the packages are produced at high speeds, a deviation in one part of the packaging machine may result in that a relatively large quantity of packages are produced that do no fulfill set quality requirements if the deviation is not detected and taken care of. A result of this may be increased losses in terms of packaging material, food product as well as production time. Thus, to be able to provide more efficient packaging machines, both in terms of financial costs and environmental costs, packaging machines that are improved in terms of handling deviations are requested by food producers.

For this reason, there is a demand for a packaging machine that is capable of having a more stable production compared to packaging machines of today, and hence reduce the packaging material waste, product waste and production downtime. An example of a known control system may be found in Bill Bolton: "Instrumentation and Control Systems - chapter 13 -Controllers", 1 January 2014 (2014-01-01), XP055737048, ISBN: 978-0-7506-6432-5. Also, documents JP S59 109918 A, US 2012/192969 A1 and US 2017/344032 A1 may be of interest for the present application. Further background art is reflected in the following documents disclosing flow control system: Bill Bolton: "Instrumentation and Control Systems - chapter 13 - Controllers", 1 January 2014 (2014-01-01), XP055737048, ISBN: 978-0-7506-6432-5; JP S59 109918 A, US 2011/054702 A1, and US 2004/074311 A1.

### Summary

It is an object of the invention to at least partly overcome one or more of the above-identified limitations of the prior art.

According to a first aspect it is provided a method for controlling a regulating valve of a packaging machine, wherein the packaging machine is a roll-fed packaging machine configured to receive a roll of a carton-based packaging material, wherein the packaging machine is configured to be connected to a processing line via the regulating valve, wherein the processing line is configured to feed a liquid food product to the packaging machine through the regulating valve, the method comprising:
determining a product flow, using a flow meter, of the liquid food product in the packaging machine;
determining an inlet pressure measurement, using a pressure sensor, of the liquid food product in the packaging machine; and
adjusting an inlet pressure to the packaging machine via the regulating valve, said regulating valve being configured to receive an output signal from a flow feed forward module in combination with an output signal from a flow proportional-integral-derivative (PID) module, wherein the flow feed forward module has the inlet pressure measurement and a flow set point as input signals, and wherein the flow PID module has the product flow and the flow set point as input signals.

By the term "inlet pressure" is here meant an inlet pressure of the liquid food product, wherein the inlet pressure is the pressure of the liquid food product before the regulating valve. Thus, the inlet pressure may be the pressure being used for adjusting the output signals from the flow feed forward module and the flow PID module.

By the term "product flow" is here meant the flow of the liquid food product determined by the flow meter. Thus, the product flow is the flow of the liquid food product, wherein the liquid food product is fed from the processing line to the packaging machine. The product flow may be an input signal to the flow feed forward module. The product flow may be an input signal to the flow PID module.

By the term "inlet pressure measurement" is here meant a measured value, also referred to as sample, of the inlet pressure of the liquid food product determined by the pressure sensor. Thus, the inlet pressure measurement is the inlet pressure of the liquid food product, wherein the liquid food product is fed from the processing line to the packaging machine before the regulating valve. The inlet pressure measurement may be an input signal to the flow feed forward module.

By the term "flow feed forward module" is here meant any feed forward control system known in the art. The flow feed forward module in the present disclosure may have the inlet pressure measurement and the flow set point as input signals. However, the flow feed forward module may have other input signals as well and is not limited to these examples.

By the term "flow proportional-integral-derivative (PID) module" is here meant any PID controller, wherein the PID controller is a control loop mechanism, known in the art. The flow PID module in the present disclosure may have the product flow and the flow set point as input signals. However, the flow PID module may have other input signals as well and is not limited to these examples.

By the term "flow set point" is here meant an input signal comprising a machine speed percentage, wherein the machine speed percentage is a value for how many packages that may be filled per time unit. The machine speed percentage may depend on the size of the packages and/or the product that may be filled in the packages. However, the flow set point may comprise other input values as well such that a start flow percentage and/or a nominal flow percentage. The start flow percentage may be used in the beginning of a start event, to ramp up the speed of the machine. The nominal flow percentage is a value used when the packaging machine is run at nominal speed.

An advantage by having the flow feed forward module arranged in combination with the flow PID module is that it is possible to quickly identify the correct real-time working point of the regulating valve. The faster response of the regulating valve allows the achievement of filling parameters stability, namely the stability of the product level and product flow. Consequently, a stable packaging machine with a higher robustness may be achieved. Put differently, by being able to control the regulating valve with improved response time, a product level of a packaging tube formed within the roll-fed packaging machine may fluctuate less, which in turn provides for less quality issues of packages being produced.

A further advantage obtained with the disclosed method may be that the packaging material waste and the product waste may be reduced. Thus, by the disclosed method, it is possible to make use of the inlet pressure of the liquid food product being fed to the packaging machine for adjusting the regulating valve through the output signals from the flow feed forward module and the flow PID module.

By adjusting the regulating valve, it may be possible to control the product flow, the product pressure and the product level of the liquid food product fed from the processing line to the packaging machine. By the present disclosure, the inlet pressure of the liquid food product may be controlled compared to conventional packaging machines wherein the inlet pressure may be unknown. For instance, conventional packaging machine and control systems may be blind to the inlet product pressure, and assume a fixed inlet pressure value as flow feed-forward input.

A further advantage may be that by determining the inlet pressure in the disclosed way may provide for an increased speed in reaction to pressure disturbances occurring in the inlet product line.

A further advantage is that the pressure sensor may be configured to be integrated within connections of already existing packaging machines and processing lines. Thus, it is possible to integrate the pressure sensor into conventional lines comprising packaging machines and processing lines.

Yet a further advantage may be that the package weight accuracy may be improved. In other words, having the level of the packaging tube controlled with high precision does not only reduce quality issues of the packages being produced, but also result in that the package weight accuracy can be improved. A consequence of having a consistent amount of product placed above a transversal sealing system of the packaging machine namely provides for that the packages formed with the help of the transversal sealing system, possibly in combination with forming flaps, consistent packages can be produced.

Overall, by using the present disclosure, a more controllable and thus, a stable packaging machine may be achieved.

The method further comprises determining a product level, using a level detector, of the liquid food product held in a vertical tube of the packaging material formed by the packaging machine, and using the product level for adjusting the regulating valve.

To improve the controlling the level in the packaging tube is directly determined by using a level detector. This may be a light-based sensor that is used for determining a distance between the sensor and the level, and by having a set reference the level may be determined.

The step of adjusting the regulating valve is further be controlled using a level PID module configured to determine the flow set point, wherein the level PID module has the product level and a level set point as input signals.

By the term "level PID module" is here meant any PID controller, wherein the PID controller is control loop mechanism, known in the art. The level PID module in the present disclosure may have the product level and the level set point as input signals. However, the flow PID module may have other input signals as well and is not limited to these examples.

By the term "level set point" is here meant an input signal that is either manually set or automatically determined by an external device.

The flow PID module may further have the product level as input signal.

Upon the method comprising the level PID module configured to determine the flow set point, the flow set point may have the output from the level PID module as an input signal in combination with one or more of the input signals discussed above.

The flow PID module may further have a machine speed percentage as input signal.

The pressure sensor may comprise a metallic membrane.

The step of adjusting the regulating valve may further be based on real-time pressure measurements from the processing line.

An advantage with having the real-time pressure measurements in this way is that the regulating valve can quickly adapt to changes in the processing line. For instance, in case there is a pressure drop in the processing line this may be detected and transferred via a data communications network to the regulating valve, which may be adjusted to compensate for this pressure drop. Further, having several different real-time pressures measurements from the processing line as input provide for that reliable control of the regulating valve can be achieved.

Put differently, critical aspects of filling control systems on packaging machines mainly concerns transitions (start/stop events) and product line disturbances, which are not measurable in real-time as of today. Due to the lack of pressure sensor, a drawback with conventional packaging machines is thus that they show a slow reaction to disturbances. Therefore, an advantage by determining pressure measurements in the processing line may be that real-time pressure information may be exchanged between the packaging machine and the processing line. By exchanging information between the packaging machine and the processing line, a stable packaging machine may be provided. Hence, this may provide for even more reduced packaging materiel waste and product waste.

According to a second aspect, it is provided a filling control system configured to adjust an inlet pressure of a packaging machine. The packaging machine is a roll-fed packaging machine configured to receive a roll of carton-based packaging material, wherein the packaging machine is configured to be connected to a processing line via a regulating valve, wherein the processing line is configured to feed a liquid food product to the packaging machine through the regulating valve. The filling control system comprising:
a flow feed forward module configured to control the regulating valve, and having the inlet pressure measurement and a flow set point as input signals; and
a flow proportional-integral-derivative (PID) module configured to control the regulating valve together with the flow feed forward module, and having the product flow and the flow set point as input signals,
wherein the flow feed forward module is in parallel with the flow PID module.

An advantage with the disclosed control system may be that faster reactivity of the control system to inlet product pressure disturbances may be achieved.

The filling control system further comprise a level PID module configured to feed into the flow feed forward module and the flow PID module and having the product level and a level set point as input signals.

The filling control system may further be configured to receive real-time pressure measurements from the processing line.

According to a third aspect, it is provided a filling line configured to control flow in the paper tube of a packaging machine. The packaging machine is a roll-fed packaging machine configured to receive a roll of carton-based packaging material, wherein the packaging machine is configured to be connected to a processing line via a regulating valve, wherein the processing line is configured to feed a liquid food product to the packaging machine through the regulating valve, the filling line further comprising:
a flow meter configured to determine a product flow of the liquid food product;
a pressure sensor configured to determine an inlet pressure measurement of the liquid food product of the packaging machine;
a flow feed forward module configured to control the regulating valve, and having the inlet pressure measurement and a flow set point as input signals; and
a flow proportional-integral-derivative (PID) module configured to control the regulating valve together with the flow feed forward module, and having the product flow and the flow set point as input signals,
wherein the flow feed forward module is in parallel with the flow PID module.

The filling line further comprise a level detector configured to determine a product flow of the liquid food product of the packaging machine, wherein the level detector is located after the flow meter in the filling line direction.

The filling line may further comprise a level PID module configured to feed into the flow feed forward module and the flow PID module and having the product level and a level set point as input signals.

Still other objectives, features, aspects and advantages of the invention will appear from the following detailed description as well as from the drawings.

Effects and features of the second and third aspects are largely analogous to those described above in connection with the first aspect. Embodiments mentioned in relation to the first aspect are largely compatible with the second and third aspect.

### Brief Description of the Drawings

Embodiments of the invention will now be described, by way of example, with reference to the accompanying schematic drawings, in which
Fig. 1 is a general illustration of a roll-fed packaging machine.
Fig. 2 illustrates a roll-fed packaging machine connected to a processing line.
Fig. 3 illustrates a filling control system for a roll-fed packaging machine.
Fig. 4 is a flow chart illustrating a method for adjusting an inlet pressure of a packaging machine.

### Detailed description

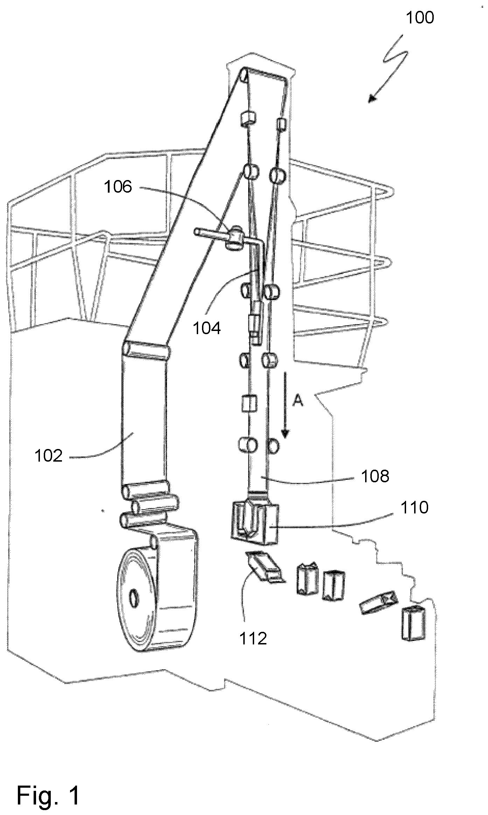

With reference to Fig. 1, a packaging machine 100, sometimes also referred to as a filling machine, is generally illustrated by way of example. The packaging machine 100 can be a roll-fed packaging machine used for packaging liquid food products in carton-based packages. Already in the 1940s this type of packaging machines was introduced by Tetra Pak, and it is today a well-known approach for packaging milk and other liquid food products in a safe and cost-efficient manner. The general approach can also be used for non-liquid food products, such as potato crisps.

Today, packaging material is often printed and prepared in packaging material production centers, also referred to as converting factories, and is shipped to a site where the packaging machine 100 is placed, e.g. a dairy. Usually the packaging material is loaded onto a reel before being transported. After arriving at the site, the reel is placed in the packaging machine as illustrated in Fig. 1.

During production a web 102 of packaging material can be fed from the reel through the packaging machine in a web feeding direction A. Before providing the liquid food product, a paper tube can be formed from the web 102 by forming a longitudinal sealing. The food product can be fed into the tube via a pipe 104 and a regulating valve 206 may be used for regulating a flow through the pipe 104. A lower end 108 of the tube can be fed into a folding device 110 in which a transversal sealing can be made, the tube can be folded according to folding lines, also referred to as weakening lines, and cut off such that packages 112 can be formed. Even though the folding device 110 is illustrated as one single device, the folding device 110 may comprise a number of different devices.

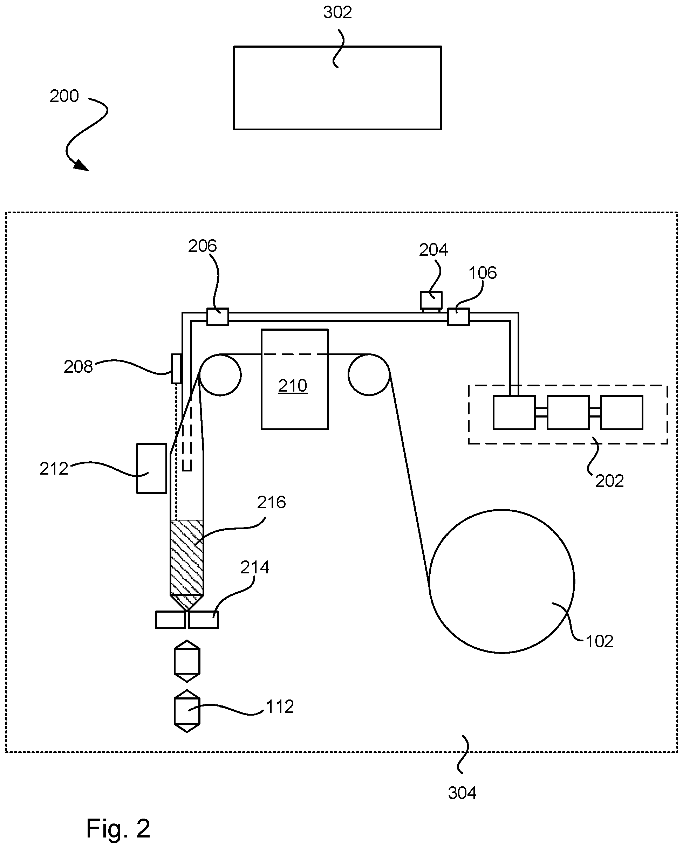

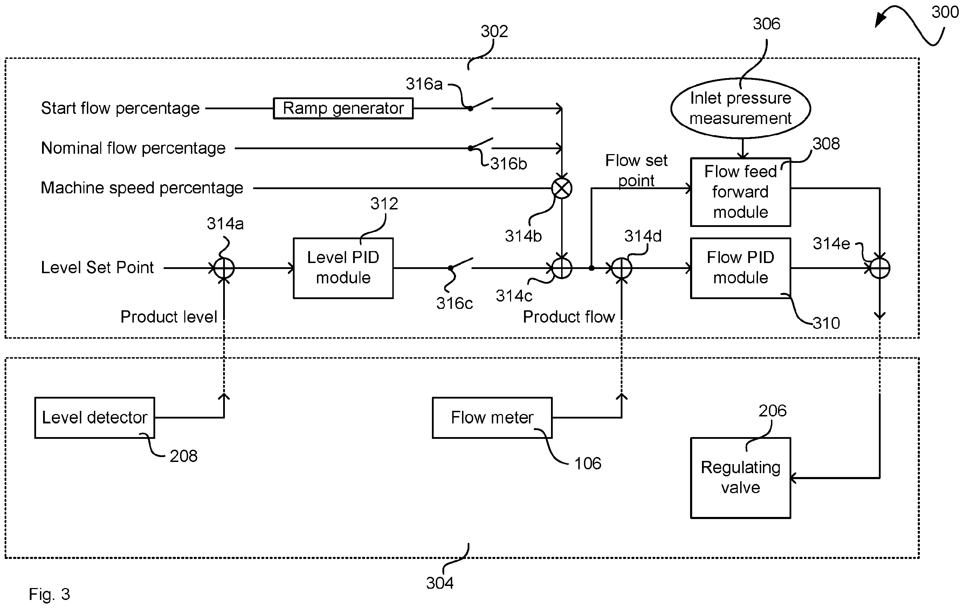

With reference to Fig. 2, a filling line 200 is generally illustrated by way of example. The filling line 200 can be configured to regulate pressure and flow in the paper tube of the packaging machine 100. The filling line 200 can comprise a filling control system 302 and a food handling system 304 configured to communicate with each other. The filling control system 302 will be discussed in more detail in connection with Fig. 3.

The food handling system 304 can comprise a processing line 202 and the packaging machine 100, wherein the processing line 202 can be connected to the packaging machine 100 via the regulating valve 206. The processing line 202 and the filling machine 100 can be connected such that the liquid food product may be fed therebetween through the regulating valve 206. The processing line 202 may be any processing line 202 known in the art.

The food handling system 304 can further comprise a pressure sensor 204 for determining an inlet pressure measurement of the liquid food product fed from the processing line 202 to the packaging machine 100. The inlet pressure measurement may be transmitted to the filling control system 302.

The packaging machine 100 can comprise a flow meter 106 for determining the product flow of the liquid food product fed from the processing line 202 to the packaging machine 100. The determined product flow may be transmitted to the filling control system 302. The packaging machine 100 can further comprise a level detector 208 for determining the product level of the liquid food product that may be fed from the processing line 202 to the packaging machine 100. The determined product level may be transmitted to the filling control system 302.

The inlet pressure measurement, the product flow and the product level may be referred to as filling parameters.

For a person skilled in the art, it is conceivable that the filling line 200 may comprise more than one pressure sensor 204, and/or more than one flow meter 106 and/or more than one level detector 208. It should also be noted that the packaging machine 100 may lack the flow meter 106 and/or the level detector 208.

The packaging machine 100 can further comprise a sterilization device 210, e.g. a hydrogen peroxide bath or an LVEB (Low-Voltage Electron Beam) station, for ensuring that the web 102 may be free from unwanted microorganisms. The packaging machine 100 can further comprise a longitudinal sealing station 212 for sealing the package along the longitudinal direction and a transversal sealing station 214, which may comprise two sealing jaws, for sealing the package transversally.

With reference to Fig. 3, a flow chart 300 of the filling control system 302 and part of the food handling system 304 of the filling line 200 is illustrated by way of example. It should be noted that not all features of the food handling system 304 are illustrated in Fig. 3. A purpose of the filling control system 302 is to provide for a more stable packaging machine 100 during pressure variations in the processing line 202.

As illustrated in Fig. 3, the food handling system 304 can comprise the regulating valve 206, the flow meter 106 and the level detector 208 as discussed in connection with Fig. 2. The food handling system 304 can be configured to transmit information to the filling control system 302. The filling control system 302 can be configured to adjust the inlet pressure of the packaging machine 100 based on the received information from the food handling system 304. The filling control system 302 can be configured to adjust the regulating valve 206 such that the inlet pressure of the packaging machine 100 can be adjusted. Thus, the food handling system 304 and the filling control system 302 can be configured to communicate with each other. By controlling the inlet pressure in the packaging machine 100 and/or the processing line 202, a quicker response for pressure disturbances occurring in the processing line 202 may be achieved.

The filling control system 302 may comprise a flow feed forward module 308 and a flow proportional-integral-derivative (PID) module 310. The filling control system 302 may further comprise a plurality of summing junctions 314a-e for summing one or more signals within the filling control system 302. The filling control system 302 may further comprise a plurality of switches 316a-c for controlling the signals that are traveling within the filling control system 302.

The flow feed forward module 308 can be configured to control the regulating valve 206. The flow PID module 310 can be configured to control the regulating valve 206. The flow feed forward module 308 may be arranged in parallel with the flow PID module 310 such that both the flow feed forward module 308 and the flow PID module 310 can be configured to control the regulating valve 206. Upon the flow feed forward module 308 and the flow PID module 310 can be controlling the regulating valve 206, the inlet pressure of the liquid food product may also be controlled. A purpose of the present arrangement, wherein the flow feed forward module 308 is arranged in parallel with the flow PID module 310, is to provide for a faster reactivity of the filling control system 302 to inlet pressure disturbances as well as real-time pressure information exchange between the packaging machine 100 and the processing line 202.

The filling control system 302 may further comprise a level PID module 312 for controlling the regulating valve 206. The level PID module 312 and the flow PID module 310 may together form a double PID feedback control loop in the filling control system, wherein the output signal from the level PID module 312 may be input signals to the flow feed forward module 308 and the flow PID module 310. Thus, the flow feed forward module 308 may be arranged in parallel with the double PID feedback control loop. By introducing the level PID module 312 in the arrangement may provide for another parameter that may be tuned and hence, controlled in the filling control system 302 in order to provide for the faster reactivity of the filling control system 302 to inlet pressure disturbances as well as the real-time pressure information exchange between the packaging machine 100 and the processing line 202.

As illustrated in Fig. 3, the liquid food product may be fed in the food handling system 304, wherein the food handling system 304 may be configured to transmit a product flow from the flow meter 106 and/or a product level from the level detector 312 to the filling control system 302. The food handling system 304 may further be configured to transmit an inlet pressure measurement 306 from the pressure sensor 204 (not illustrated in Fig. 3).

The inlet pressure measurement 306 may be transmitted from the pressure sensor 204 to the flow feed forward module 308, thus the inlet pressure measurement 306 may be an input signal to the flow feed forward module 308. A further input signal to the flow feed forward module 308 may be a flow set point, wherein the flow set point can be based on a machine speed percentage. The machine speed percentage may pass a second summing junction 314b and a third summing junction 314c before entering the flow feed forward module 308. According to one example, the flow set point may further be based on a start flow percentage and/or a nominal flow percentage. If the flow set point may be further based on the start flow percentage, a first switch 316a may be set such that the start flow percentage may be transmitted to the second summing junction 314b. Alternatively, or in combination, if the flow set point may be further based on the nominal flow percentage, a second switch 316b may be set such that the nominal flow percentage may be transmitted to the second summing junction 314b. The second summing junction 314b may be configured to combine the machine speed percentage with the start flow percentage and/or the nominal flow percentage. For a person skilled in the art, it is conceivable that the first switch 316a and the second switch 316b may be set such that both the start flow percentage and the nominal flow percentage are combined with the machine speed percentage in the second summing junction 314b.

The product flow may be transmitted from the flow meter 106 to a fourth summing junction 314d, wherein the product flow may be combined with the flow set point. The flow set point may be configured in the same way as discussed above. Thus, the flow set point may be the same flow set point arranged as the input signal to the flow feed forward module 308. The product flow in combination with the flow set point may be transmitted to the flow PID module 310, thus the product flow and the flow set point may be input signals to the flow PID module 310.

As discussed above, the flow feed forward module 308 may be arranged in parallel with the flow PID module 310. The output signal from the flow feed forward module 308 and from the flow PID module 310 may be combined in a fifth summing junction 314e. The output signal from the fifth summing junction 314e may be a control signal configured to control the regulating valve 206.

Thus, the regulating valve 206, may be controlled based on the inlet pressure measurement 306, the product flow and the flow set point.

An advantage with the present disclosure is that the pressure of the liquid food product in the paper tube may be known and controlled, compared to conventional packaging machines whose control systems have an inlet pressure normally set to a fixed value and hence, independent of other filling parameters in the system.

An advantage by controlling the regulating valve 206 based on determined values from both the flow meter and the pressure sensor is that a faster reaction of the regulating valve 206 is achieved. Thus, the regulating valve 206 may be controlled with higher feedback compared to conventional packaging machines and control systems due to the arrangement between the flow feed forward module 308 and the flow PID module 310. Thus, the flow feed forward module 308 may be configured to tune the filling parameter in a quicker way compared to conventional packaging machines and control systems.

According to one example, the product level may be transmitted from the level detector 208 to a first summing junction 314a, wherein the product level may be combined with a product set point. The product level in combination with the level set point may be transmitted to the level PID module 312, thus the product level and the level set point may be input signals to the level PID module 312. Upon a third switch 316c may be set, the output signal from the level PID module 312 may be transmitted to a third summing junction 314c. In the third summing junction 314c, the output signal from the level PID module 312 may be combined with the machine speed percentage and the start flow percentage and/or the nominal flow percentage. The output signal from the third summing junction 314c may be the flow set point. Thus, the flow set point may further be based on the output signal from the level PID module 312. In addition, the output signal from the third summing junction 314c may be transmitted to the fourth summing junction 314d and hence, combined with the product flow.

As discussed above, the flow feed forward module 308 may be arranged in parallel with the double PID feedback control loop. The output signal from the flow feed forward module 308 and from the double PID feedback control loop may be combined in a fifth summing junction 314e. The output signal from the fifth summing junction 314e may be the control signal configured to control the regulating valve 206.

An advantage by having the level PID module 312 in the filling control system is that the adjustment of the regulating valve 206 may be even more precise due to more filling parameters.

A further advantage by introducing the level PID module 312 in the arrangement is that, in combination with the switches 316a-c, it is possible to optimize the signals in the system and hence, adjust the regulating valve 206 in a more precise and efficient way.

Yet a further advantage, the filling parameters are used to tune the system for stability achievements through different phases in various configurations.

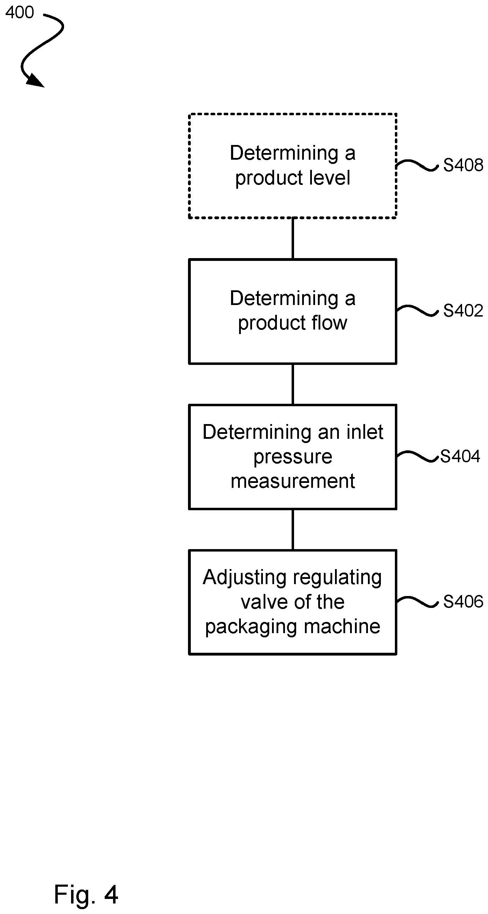

In Fig. 4 it is presented a flow chart illustrating a method 400 for adjusting the regulating valve by means of an inlet pressure measurement of a packaging machine 100, wherein the packaging machine 100 may be a roll-fed packaging machine configured to receive a roll of a carton-based packaging material 102. The packaging machine 100 can be configured to be connected to a processing line 202 via a regulating valve 206, wherein the processing line 202 can be configured to feed a liquid food product 216 to the packaging machine 100 through the regulating valve 206.

In a first step S402, a product flow of the liquid food product in the packaging machine 100 can be determined by using a flow meter 106. In a second step S404, an inlet pressure measurement 306 of the liquid food product in the packaging machine 100 can be determined by using a pressure sensor 204. Preferably, the pressure sensor 204 comprises a metallic membrane. In a third step S406, the regulating valve 206 can be adjusted by using a flow feed forward module 308 in parallel with a flow proportional-integral-derivative (PID) module 310. The flow feed forward module 308 has the inlet pressure measurement 306 and a flow set point as input signals. The flow PID module 310 has the product flow and the flow set point as input signals.

The method 400 further comprises the fourth step S408 of determining a product level, using a level detector 208, of the liquid food product 216 held in a vertical tube 308 of the packaging material 102 formed by the packaging machine 100. The third step S406 further comprises using the product level for adjusting the regulating valve 206.

Optionally, the third step S406 of adjusting the regulating valve may be further controlled using a level PID module 312 configured to determine the flow set point, wherein the level PID module has the product level and a level set point as input signals.

Optionally, the flow PID module 310 may further have the product flow and/or a machine speed percentage as input signal.

Optionally, the third step S406 of adjusting the regulating valve 206 may further be based on real-time pressure measurements from the processing line 202.

As already discussed, one or more embodiments may relate to the filling line 200 comprising the filling control system 302 and the food handling system 304. The food handling system 304 may comprise the processing line 202 and the filling machine 100. The food handling system 304 may comprise the regulating valve 206. The regulating valve 206 may connect the processing line 202 and the filling machine 100. The filling line 200 may be configured to perform the method according to one or more embodiments as described above.

The filling line 200 may be configured to control product pressure and/or flow in the paper tube of the packaging machine 100, e.g. a roll-fed packaging machine configured to receive a roll of carton-based packaging material 102. The packaging machine 100 is configured to be connected to the processing line 202 via the regulating valve 206, wherein the processing line 202 is configured to feed a liquid food product 216 to the packaging machine 100 through the regulating valve 206.

The food handling system 304 may comprise the pressure sensor 204 for determining the inlet pressure measurement of the liquid food product fed from the processing line 202 to the packaging machine 100. The inlet pressure measurement may be transmitted to the filling control system 302. The pressure sensor 204 may be positioned upstream of the regulating valve 206 in a direction of flow of the liquid food product 216.

Preferably, the food handling system 304 may comprise the flow meter 106 for determining the product flow of the liquid food product fed from the processing line 202 to the packaging machine 100. The determined product flow may be transmitted to the filling control system 302. The flow meter 106 may be positioned upstream of the regulating valve 206 in the direction of flow of the liquid food product 216.

Preferably, the food handling system 304 can comprise the level detector 208 for determining the product level of the liquid food product that may be fed from the processing line 202 to the packaging machine 100. The determined product level may be transmitted to the filling control system 302. The level detector 208 may be positioned downstream of the regulating valve 206 in the direction of flow of the liquid food product 216.

The filling control system 302 may comprise the flow feed forward module 308, the flow proportional-integral-derivative (PID) module 310 and/or the level PID module 312.

The flow feed forward module 308 may receive as input the inlet pressure measurement 306 from the pressure sensor 204 and the flow set point. The flow feed forward module 308 may comprise as an output a control signal for adjusting the regulating valve 206 calculated as a function of the flow set point and inlet pressure measurement 306.

The flow proportional-integral-derivative (PID) module 310 may receive as input the flow set point and the product flow. An output of the flow PID module 310 may be indicative of a difference between a real flow, measured e.g. by means of the flow meter 106, and a desired flow, i.e. the flow set point.

The level PID module 312 may comprise as inputs the level set point and the product level. An output of the level PID module 312 may be indicative of a difference between a real product level, measured e.g. by means of the level detector 308, and a desired level, i.e. the level set point.

The outputs of the flow proportional-integral-derivative (PID) module 310 and the flow feed forward module 308 may be combined. The regulating valve 206 may be adjusted as a function of the combined outputs.

The flow set point may be indicative of a target flow of product through the regulating valve 206. The flow set point may be calculated as a function of one or more of a start flow percentage a nominal flow percentage, a machine speed percentage, a level set point and/or a product level.

The step of adjusting the regulating valve 206 may comprise adjusting a flow of liquid product passing therethrough. The step of adjusting the regulating valve 206 may comprise physically opening or closing the valve 206 to regulate the flow of liquid product therethrough. That is, by means of filling control system 302 and the regulating valve 206 it is possible to control a flow of the liquid product through the filling machine 100. Advantageously, this way it is possible to control a pressure and/or flow of the liquid product.

## Claims

1. A method (400) for controlling a regulating valve (206) of a packaging machine (100), wherein the packaging machine (100) is a roll-fed packaging machine configured to receive a roll of a carton-based packaging material (102), wherein the packaging machine (100) is configured to be connected to a processing line (202) via the regulating valve (206), wherein the processing line (202) is configured to feed a liquid food product (216) to the packaging machine (100) through the regulating valve (206), the method (400) comprising:
determining (S402) a product flow, using a flow meter (106), of the liquid food product in the packaging machine (100);
determining (S404) an inlet pressure measurement (306), using a pressure sensor (204), of the liquid food product in the packaging machine (100); wherein the pressure sensor (204) is positioned upstream of the regulating valve (206) in a direction of flow of the liquid food product (216);
adjusting the regulating valve (206) , said regulating valve being configured to receive an output signal from a flow feed forward module (308) in combination with an output signal from a flow proportional-integral-derivative (PID) module (310), wherein the flow feed forward module (308) has the inlet pressure measurement (306) and a flow set point as input signals, and wherein the flow PID module (310) has the product flow and the flow set point as input signals;
determining a product level, using a level detector (208), of the liquid food product (216) held in a vertical tube (308) of the packaging material (102) formed by the packaging machine (100), and
calculating the flow set point as a function of the determined product level.

2. The method (400) according to claim 1, wherein the step of adjusting (S406) the regulating valve (206) comprises regulating a flow of the liquid food product (216) through the regulating valve (206).

3. The method (400) of claim 1 or claim 2, wherein the flow PID module (310) has a difference between the product flow and the flow set point as input.

4. The method (400) according to any one of the previous claims, comprising calculating the flow set point as a function of an output of a level PID module (312) having the product level and a level set point as input signals, preferably having a difference between the product level and the level set point as input.

5. The method (400) according to any of the previous claims, wherein the flow set point is calculated as a function of one or more of a product level, a level set point, a machine speed percentage, a nominal flow percentage and/or a start flow percentage.

6. The method (400) according to any one of the preceding claims, wherein the pressure sensor (204) comprises a metallic membrane.

7. The method (400) according to any one of the preceding claims, wherein the step of adjusting (S406) the regulating valve (206) is based on real-time pressure measurements from the processing line (202).

8. A filling line (200) configured to control flow in the paper tube of a packaging machine (100), wherein the packaging machine (100) is a roll-fed packaging machine configured to receive a roll of carton-based packaging material (102), wherein the packaging machine (100) is configured to be connected to a processing line (202) via a regulating valve (206), wherein the processing line (202) is configured to feed a liquid food product (216) to the packaging machine (100) through the regulating valve (206), the filling line (200) further comprising:
a flow meter (106) configured to determine a product flow of the liquid food product;
a pressure sensor (204) configured to determine an inlet pressure measurement (306) of the liquid food product of the packaging machine (100);
a flow feed forward module (308) configured to control the regulating valve (206), and having the inlet pressure measurement (306) and a flow set point as input signals;
a flow proportional-integral-derivative (PID) module (310) configured to control the regulating valve (206) together with the flow feed forward module (306), and having the product flow and the flow set point as input signals, and
a level detector (208) configured to determine a product level of the liquid food product of the packaging machine (100), the flow set point being calculated as a function of the determined product level, and wherein the level detector (208) is located after the flow meter (106) in the filling line direction
wherein the flow feed forward module (308) is parallel with the flow PID module (310).

9. The filling line (200) according to claim 8, wherein the filling line (200) further comprises a level PID module (312) configured to feed into the flow feed forward module (308) and the flow PID module (310) and having the product level and a level set point as input signals.

## Patentansprüche

1. Verfahren (400) zum Steuern eines Regelventils (206) einer Verpackungsmaschine (100), wobei die Verpackungsmaschine (100) eine Verpackungsmaschine mit Rollenzuführung ist, die dazu ausgelegt ist, eine Rolle eines kartonbasierten Verpackungsmaterials (102) aufzunehmen, wobei die Verpackungsmaschine (100) dazu ausgelegt ist, über das Regelventil (206) mit einer Verarbeitungslinie (202) verbunden zu sein, wobei die Verarbeitungslinie (202) dazu ausgelegt ist, der Verpackungsmaschine (100) durch das Regelventil (206) ein flüssiges Lebensmittelprodukt (216) zuzuführen, wobei das Verfahren (400) Folgendes umfasst:
Bestimmen (S402) eines Produktstroms des flüssigen Lebensmittelprodukts in der Verpackungsmaschine (100) unter Verwendung eines Strömungsmessers (106);
Bestimmen (S404) eines Einlassdruckmesswerts (306) des flüssigen Lebensmittelprodukts in der Verpackungsmaschine (100) unter Verwendung eines Drucksensors (204); wobei der Drucksensor (204) in eine Strömungsrichtung des flüssigen Lebensmittelprodukts (216) dem Regelventil (206) vorgelagert positioniert ist;
Einstellen des Regelventils (206), wobei das Regelventil dazu ausgelegt ist, ein Ausgangssignal von einem Strömungsvorschubmodul (308) in Kombination mit einem Ausgangssignal eines Strömungs-Proportional-Integral-Differenzial(PID)-Moduls (310) zu empfangen, wobei das Strömungsvorschubmodul (308) den Einlassdruckmesswert (306) und den Strömungssollwert als Eingangssignale aufweist und wobei das Strömungs-PID-Modul (310) den Produktstrom und den Strömungssollwert als Eingangssignale aufweist;
Bestimmen eines Produktfüllstands des flüssigen Lebensmittelprodukts (216), das in einem vertikalen Schlauch (308) des von der Verpackungsmaschine (100) geformten Verpackungsmaterials (102) gehalten wird, mittels eines Füllstandssensors (208) und
Berechnen des Strömungssollwerts als Funktion des bestimmten Produktfüllstands.

2. Verfahren (400) nach Anspruch 1, wobei der Schritt des Einstellens (S406) des Regelventils (206) das Regeln einer Strömung des flüssigen Lebensmittelprodukts (216) durch das Regelventil (206) umfasst.

3. Verfahren (400) nach Anspruch 1 oder Anspruch 2, wobei das Strömungs-PID-Modul (310) eine Differenz zwischen dem Produktstrom und dem Strömungssollwert als Eingang aufweist.

4. Verfahren (400) nach einem der vorstehenden Ansprüche, umfassend Berechnen des Strömungssollwerts als Funktion eines Ausgangs eines Füllstands-PID-Moduls (312), das den Produktfüllstand und einen Füllstandssollwert als Eingangssignale aufweist, vorzugsweise eine Differenz zwischen dem Produktfüllstand und dem Füllstandssollwert als Eingang aufweist.

5. Verfahren (400) nach einem der vorstehenden Ansprüche, wobei der Strömungssollwert als Funktion eines Produktfüllstands, eines Füllstandssollwerts, eines Maschinendrehzahlprozentsatzes, eines Nennströmungsprozentsatzes und/oder eines Strömungsbeginnprozentsatzes berechnet wird.

6. Verfahren (400) nach einem der vorstehenden Ansprüche, wobei der Drucksensor (204) eine metallische Membran umfasst.

7. Verfahren (400) nach einem der vorstehenden Ansprüche, wobei der Schritt des Einstellens (S406) des Regelventils (206) auf Echtzeitdruckmesswerten von der Verarbeitungslinie (202) basiert.

8. Abfülllinie (200), die zum Steuern der Strömung in den Papierschlauch einer Verpackungsmaschine (100) ausgelegt ist, wobei die Verpackungsmaschine (100) eine Verpackungsmaschine mit Rollenzuführung ist, die dazu ausgelegt ist, eine Rolle eines kartonbasierten Verpackungsmaterials (102) aufzunehmen, wobei die Verpackungsmaschine (100) dazu ausgelegt ist, über ein Regelventil (206) mit einer Verarbeitungslinie (202) verbunden zu sein, wobei die Verarbeitungslinie (202) dazu ausgelegt ist, der Verpackungsmaschine (100) durch das Regelventil (206) ein flüssiges Lebensmittelprodukt (216) zuzuführen, wobei die Abfülllinie (200) ferner Folgendes umfasst:
einen Strömungsmesser (106), der dazu ausgelegt ist, den Produktstrom des flüssigen Lebensmittelprodukts zu bestimmen;
einen Drucksensor (204), der dazu ausgelegt ist, einen Einlassdruckmesswert (306) des flüssigen Lebensmittelprodukts der Verpackungsmaschine (100) zu bestimmen;
ein Strömungsvorschubmodul (308), das dazu ausgelegt ist, das Regelventil (206) zu steuern, und den Einlassdruckmesswert (306) und den Strömungssollwert als Eingangssignale aufweist;
ein Strömungs-Proportional-Integral-Differenzial(PID)-Modul (310), das dazu ausgelegt ist, das Regelventil (206) zusammen mit dem Strömungsvorschubmodul (308) zu steuern, und den Produktstrom und den Strömungssollwert als Eingangssignale aufweist, und
einen Füllstandssensor (208), der dazu ausgelegt ist, den Produktfüllstand des flüssigen Lebensmittelprodukts der Verpackungsmaschine (100) zu bestimmen, wobei der Strömungssollwert als Funktion des bestimmten Produktfüllstands berechnet wird und
wobei der Füllstandssensor (208) in der Abfülllinienrichtung hinter dem Strömungsmesser (106) angeordnet ist,
wobei das Strömungsvorschubmodul (308) parallel zum Strömungs-PID-Modul (310) ist.

9. Abfülllinie (200) nach Anspruch 8, wobei die Abfülllinie (200) ferner ein Füllstands-PID-Modul (312) umfasst, das dazu ausgelegt ist, in das Strömungsvorschubmodul (308) zu speisen, und wobei das Strömungs-PID-Modul (310) den Produktfüllstand und einen Füllstandssollwert als Eingangssignale aufweist.

## Revendications

1. Procédé (400) de commande d'une vanne de régulation (206) d'une machine d'emballage (100), la machine d'emballage (100) étant une machine d'emballage alimentée par rouleau conçue pour recevoir un rouleau de matériau d'emballage à base de carton (102), la machine d'emballage (100) étant conçue pour être raccordée à une chaîne de traitement (202) par le biais de la vanne de régulation (206), la chaîne de traitement (202) étant conçue pour alimenter la machine d'emballage (100) avec un produit alimentaire liquide (216) à travers la vanne de régulation (206), le procédé (400) comprenant :
déterminer (S402) un débit de produit, au moyen d'un débitmètre (106), du produit alimentaire liquide dans la machine d'emballage (100) ;
déterminer (S404) une mesure de pression d'entrée (306), au moyen d'un capteur de pression (204), du produit alimentaire liquide dans la machine d'emballage (100) ; le capteur de pression (204) étant placé en amont de la vanne de régulation (206) dans une direction d'écoulement du produit alimentaire liquide (216) ;
ajuster la vanne de régulation (206), ladite vanne de régulation étant conçue pour recevoir un signal de sortie provenant d'un module de régulation de débit à action directe (308) en combinaison avec un signal de sortie provenant d'un module de régulation de débit de type proportionnelle intégrale dérivée (PID) (310), le module de régulation de débit à action directe (308) ayant la mesure de pression d'entrée (306) et une valeur de consigne de débit comme signaux d'entrée, et le module de régulation de débit de type PID (310) ayant le débit de produit et la valeur de consigne de débit comme signaux d'entrée ;
déterminer un niveau de produit, au moyen d'un détecteur de niveau (208), du produit alimentaire liquide (216) se trouvant dans un tube vertical (308) du matériau d'emballage (102) formé par la machine d'emballage (100) ; et
calculer la valeur de consigne de débit en fonction du niveau de produit déterminé.

2. Procédé (400) selon la revendication 1, dans lequel l'étape consistant à ajuster (S406) la vanne de régulation (206) comprend la régulation d'un débit du produit alimentaire liquide (216) à travers la vanne de régulation (206).

3. Procédé (400) selon la revendication 1 ou la revendication 2, dans lequel le module de régulation de débit de type PID (310) a une différence entre le débit de produit et la valeur de consigne de débit comme entrée.

4. Procédé (400) selon l'une quelconque des revendications précédentes, comprenant le calcul de la valeur de consigne de débit en fonction d'une sortie d'un module de régulation de niveau de type PID (312) ayant le niveau de produit et une valeur de consigne de niveau comme signaux d'entrée, de préférence ayant une différence entre le niveau de produit et la valeur de consigne de niveau comme entrée.

5. Procédé (400) selon l'une quelconque des revendications précédentes, dans lequel la valeur de consigne de débit est calculée en fonction d'une ou de plusieurs données parmi un niveau de produit, une valeur de consigne de niveau, un pourcentage de vitesse de machine, un pourcentage de débit nominal et/ou un pourcentage de débit initial.

6. Procédé (400) selon l'une quelconque des revendications précédentes, dans lequel le capteur de pression (204) comprend une membrane métallique.

7. Procédé (400) selon l'une quelconque des revendications précédentes, dans lequel l'étape consistant à ajuster (S406) la vanne de régulation (206) est basée sur des mesures de pression en temps réel provenant de la chaîne de traitement (202).

8. Chaîne de remplissage (200) conçue pour réguler un débit dans le tube en carton d'une machine d'emballage (100), la machine d'emballage (100) étant une machine d'emballage alimentée par rouleau conçue pour recevoir un rouleau de matériau d'emballage à base de carton (102), la machine d'emballage (100) étant conçue pour être raccordée à une chaîne de traitement (202) par le biais d'une vanne de régulation (206), la chaîne de traitement (202) étant conçue pour alimenter la machine d'emballage (100) avec un produit alimentaire liquide (216) à travers la vanne de régulation (206), la chaîne de remplissage (200) comprenant, en outre :
un débitmètre (106) conçu pour déterminer un débit de produit du produit alimentaire liquide ;
un capteur de pression (204) conçu pour déterminer une mesure de pression d'entrée (306) du produit alimentaire liquide de la machine d'emballage (100) ;
un module de régulation de débit à action directe (308) conçu pour commander la vanne de régulation (206), et ayant la mesure de pression d'entrée (306) et une valeur de consigne de débit comme signaux d'entrée ;
un module de régulation de débit de type proportionnelle intégrale dérivée (PID) (310) conçu pour commander la vanne de régulation (206) conjointement avec le module de régulation de débit à action directe (308), et ayant le débit de produit et la valeur de consigne de débit comme signaux d'entrée ; et
un détecteur de niveau (208) conçu pour déterminer un niveau de produit du produit alimentaire liquide de la machine d'emballage (100), la valeur de consigne de débit étant calculée en fonction du niveau de produit déterminé, et
le détecteur de niveau (208) étant situé après le débitmètre (106) dans la direction de la chaîne de remplissage,
le module de régulation de débit à action directe (308) étant parallèle au module de régulation de débit de type PID (310).

9. Chaîne de remplissage (200) selon la revendication 8, la chaîne de remplissage (200) comprenant, en outre, un module de régulation de niveau de type PID (312) conçu pour alimenter le module de régulation de débit à action directe (308) et le module de régulation de débit de type PID (310) et ayant le niveau de produit et une valeur de consigne de niveau comme signaux d'entrée.
